# EUROPÄISCHE PATENTANMELDUNG

(11) **EP 3 231 772 A1**
(43) Veröffentlichungstag der Anmeldung: **18.10.2017**
(21) Anmeldenummer: 17169945.7
(22) Anmeldetag: 08.05.2017
(51) Int. Cl.: C02F 1/42, C02F 1/52, C02F 103/16, C02F 101/20

(54) **VERFAHREN ZUR ENTFERNUNG VON GELÖSTEM NICKEL UND KUPFER AUS ALKALISCHEM ABWASSER**

(71) Anmelder: Heraeus Deutschland GmbH & Co. KG, 63450 Hanau (DE)
(72) Erfinder: Janitz, Hartmut, 61130 Nidderau (DE); Lehr, Birger, 61130 Nidderau (DE)
(74) Vertreter: Heraeus IP

(57) **Zusammenfassung**

Verfahren zur Entfernung von jeweils gelöst und in Gegenwart von chelatisierendem Polyamin vorliegendem Nickel und Kupfer aus alkalischem Abwasser, dadurch gekennzeichnet, dass man das Abwasser mit mindestens einer organischen Schwefelverbindung ausgewählt aus der Gruppe bestehend aus Thiocarbamaten, Dithiocarbamaten und Thioharnstoffen behandelt.

## Beschreibung

Die Erfindung betrifft ein Verfahren zur Entfernung von in Gegenwart von chelatisierendem Polyamin gelöst vorliegendem Nickel respektive Kupfer aus alkalischem Abwasser.

Alkalische Abwässer mit darin gelöst vorliegendem Nickel respektive Kupfer müssen vor der Entsorgung über den Abwasserkanal auf einen vorgeschriebene Grenzwerte einhaltenden Nickel- und Kupfergehalt eingestellt werden. Letzteres kann durch geeignete Fällungsreaktionen erreicht werden, beispielsweise durch Behandlung solcher alkalischer Abwässer mit Sulfid zwecks Fällung und Abtrennung von Nickel und Kupfer als Sulfide vor der Einleitung in den Abwasserkanal. Diese an sich bekannte Vorgehensweise stößt jedoch bei gleichzeitiger Anwesenheit von chelatisierendem Polyamin im zu behandelnden Abwasser an Grenzen, d.h. eine verlässliche und vollständige Fällung kann dann beeinträchtigt sein.

US 4,971,775 offenbart die Behandlung von alkalischem Abwasser, welches unter anderem gelöstes Nickel, gelöstes Kupfer und Chelatbildner vom Polyaminpolyessigsäure-Typ wie beispielsweise Ethylendiamintetraessigsäure (EDTA) enthält, mit Dialkyldithiocarbamat.

Aufgabe der Erfindung ist die Bereitstellung eines Verfahrens, welches die verlässliche Entfernung bis auf regulatorisch akzeptable Restanteile von gelöst und in Gegenwart von chelatisierendem Polyamin vorliegendem Nickel respektive Kupfer aus alkalischem Abwasser gewährleistet.

Die Erfindung besteht in einem Verfahren zur Entfernung von jeweils gelöst und in Gegenwart von chelatisierendem Polyamin vorliegendem Nickel und Kupfer aus alkalischem Abwasser, dadurch gekennzeichnet, dass man das Abwasser mit mindestens einer organischen Schwefelverbindung ausgewählt aus der Gruppe bestehend aus Thiocarbamaten, Dithiocarbamaten und Thioharnstoffen behandelt.

Der hierin verwendete Ausdruck "alkalisches Abwasser" bedeutet zumindest ursprünglich alkalisches Abwasser mit einem pH-Wert im Bereich von 7,5 bis 11, insbesondere im Bereich von >7,5 bis 10, d.h. das alkalische Abwasser gelangt zumindest anfänglich mit einem solchen basischen pH-Wert ins erfindungsgemäße Abwasserbehandlungsverfahren. Es handelt sich dabei um von gelöstem Nickel und/oder von gelöstem Kupfer zu reinigendes Abwasser, welches ferner chelatisierendes Polyamin enthält.

Der hierin verwendete Ausdruck "chelatisierendes Polyamin" umfasst freies als mehrzähniger Ligand zur Bildung von Chelatkomplexen befähigtes und/oder als Komplexligand gebundenes Polyamin. Mit anderen Worten, das chelatisierende Polyamin liegt im alkalischen Abwasser frei und/oder als Komplexligand gebunden vor, beispielsweise in gelösten Kupfer- respektive Nickelkomplexen. Beispiele für chelatisierende Polyamine sind Polyalkylenpolyamine wie Ethylendiamin, Diethylentriamin (DETA) und Triethylentetramin. DETA ist bevorzugt.

Hierin ist die Rede von "gelöst vorliegendem Nickel" respektive von "gelöst vorliegendem Kupfer". Im Rahmen der vorliegenden Erfindung bedeutet dies, dass die Metalle Nickel respektive Kupfer als gelöstes Ni²⁺, als gelöstes Cu²⁺, als gelöster Nickelkomplex mit Polyaminligand oder -liganden respektive als gelöster Kupferkomplex mit Polyaminligand oder-liganden im alkalischen Abwasser vorliegen können.

Der hierin verwendete Begriff "Thiocarbamat" umfasst neben Thiocarbaminsäureestern und Thiocarbaminsäuresalzen auch mit Thiocarbamatgruppen vom Typ -NR¹C(=S)OR², -NR¹C(=O)SR² und/oder -O-C(=S)NR³R⁴ funktionalisierte organische Polymere, wobei R¹ und R² unabhängig voneinander für Wasserstoff oder einen organischen Rest stehen können, wobei ein organischer Rest R¹ zusammen mit einem organischen Rest R² einen Ring bilden kann, respektive wobei R³ und R⁴ unabhängig voneinander für Wasserstoff oder einen organischen Rest stehen können, wobei ein organischer Rest R³ zusammen mit einem organischen Rest R⁴ einen Ring bilden kann. Es kann sich bei den funktionalisierten Polymeren beispielsweise um Harze, insbesondere um solche auf Styrolbasis handeln. Zweckmäßig handelt es sich um makroporöse Harze, speziell auf Basis vernetzten Styrolcopolymers.

Der hierin verwendete Begriff "Dithiocarbamat" umfasst neben Dithiocarbaminsäureestern und Dithiocarbaminsäuresalzen wie beispielsweise Dimethyldithio-carbamat, Diethyldithiocarbamat, Natriumdimethyldithiocarbamat, Natriumdiethyldithio-carbamat, Tetramethylthiuramonosulfid und Tetramethylthiuramdisulfid, auch mit Dithiocarbamatgruppen vom Typ -NR¹C(=S)SR² und/oder vom Typ -S-C(=S)NR³R⁴ funktionalisierte organische Polymere, wobei R¹ und R² unabhängig voneinander für Wasserstoff oder einen organischen Rest stehen können, wobei ein organischer Rest R¹ zusammen mit einem organischen Rest R² einen Ring bilden kann, respektive wobei R³ und R⁴ unabhängig voneinander für Wasserstoff oder einen organischen Rest stehen können, wobei ein organischer Rest R³ zusammen mit einem organischen Rest R⁴ einen Ring bilden kann. Es kann sich bei den funktionalisierten Polymeren beispielsweise um Harze, insbesondere um solche auf Styrolbasis handeln. Zweckmäßig handelt es sich um makroporöse Harze, speziell auf Basis vernetzten Styrolcopolymers.

Der hierin verwendete Begriff "Thioharnstoff" umfasst neben organischen Thioharnstoffen auch mit Thioharnstoffgruppen vom Typ -NR¹C(=S)NR²R³ funktionalisierte organische Polymere, wobei R¹, R² und R³ unabhängig voneinander für Wasserstoff oder einen organischen Rest stehen können, wobei ein organischer Rest R¹ zusammen mit einem organischen Rest R² oder R³ oder ein organischer Rest R² zusammen mit einem organischen Rest R³ einen Ring bilden kann. Es kann sich bei den funktionalisierten Polymeren beispielsweise um Harze, insbesondere um solche auf Styrolbasis handeln. Zweckmäßig handelt es sich um makroporöse Harze, speziell auf Basis vernetzten Styrolcopolymers.

Demnach kann es sich bei dem oder den zur Behandlung des alkalischen Abwassers im erfindungsgemäßen Verfahren eingesetzten Thiocarbamaten, Dithiocarbamaten und/oder Thioharnstoffen um niedermolekulare (durch Summen- und Strukturformel charakterisierbare) organische Schwefelverbindungen und/oder um funktionelle Gruppen von ein oder mehreren organischen Polymeren handeln.

Das alkalische Abwasser enthält neben beispielsweise 500 bis 3000 mg/L chelatisierendem Polyamin beispielsweise 10 bis 2000 mg/L gelöstes Nickel und/oder beispielsweise 5 bis 500 mg/L gelöstes Kupfer. Ein solches alkalisches Abwasser kann beispielsweise im Zuge einer Edelmetallraffination, beispielsweise im Zuge einer Rhodiumfällung mit Polyalkylenpolyamin wie beispielsweise DETA, entstehen. Eine dabei abgetrennte, von Edelmetall respektive Rhodium befreite wässrige Lösung kann neben gelöstem Nickel und/oder gelöstem Kupfer sowie chelatisierendem Polyamin weitere gelöste Metalle, insbesondere von Nickel und Kupfer verschiedene Übergangsmetalle, enthalten. Um den Großteil der gelösten Metalle zu entfernen, kann besagte wässrige Lösung einer an sich bekannten Hydroxidfällung beispielsweise durch Zugabe von Alkali- und/oder Erdalkalihydroxid bis zur Einstellung eines pH-Wertes der Lösung beispielsweise im Bereich von 7,5 bis 11, insbesondere im Bereich von >7,5 bis 10 unterworfen werden. Im Ergebnis werden dabei schwerlösliche Hydroxide respektive Oxidhydrate der Metalle gefällt, die mit üblichen Methoden wie beispielsweise Sedimentieren, Dekantieren, Filtrieren und/oder Zentrifugieren von der wässrigen Phase abgetrennt werden können. Als wässrige Phase erhält man ein nach dem erfindungsgemäßen Verfahren zu reinigendes, d.h. von gelöst in Gegenwart von chelatisierendem Polyamin vorliegendem Nickel respektive Kupfer zu befreiendes alkalisches Abwasser.

Unerwarteterweise gelingt es mittels der erfindungsgemäßen Verfahrensweise, trotz gleichzeitiger Anwesenheit von chelatisierendem Polyamin, in dem alkalischen Abwasser gelöst vorliegendes Nickel respektive Kupfer durch Behandlung mit einer oder mehreren der vorerwähnten organischen Schwefelverbindungen bis auf Restanteile von jeweils <0,5 mg/L (ca. <0,5 Gewichts-ppm Nickel und ca. <0,5 Gewichts-ppm Kupfer) zu entfernen.

In einer ersten Ausführungsform des erfindungsgemäßen Verfahrens kann das zu reinigende alkalische Abwasser, gegebenenfalls erst nach vorheriger Einstellung auf einen pH-Wert beispielsweise im Bereich von 3,5 bis 6, mit einer oder mehreren der vorerwähnten niedermolekularen organischen Schwefelverbindungen vermischt werden und der dabei gebildete Nickel respektive Kupfer enthaltende Niederschlag, gegebenenfalls unter Zusatz von üblichem Flockungshilfsmittel beispielsweise vom Polyacrylamid-Typ, mit üblichen Methoden wie beispielsweise Sedimentieren, Dekantieren, Filtrieren und/oder Zentrifugieren von der wässrigen Phase abgetrennt werden. Die gegebenenfalls gewünschte vorherige pH-Einstellung auf einen Wert im Bereich von 3,5 bis 6 kann durch Säurezugabe zum alkalischen Abwasser erfolgen, beispielsweise durch Salzsäurezugabe; selbstverständlich handelt es sich danach nicht länger um ein - wie ursprünglich - alkalisches Abwasser. Die Zugabemenge der mindestens einen niedermolekularen organischen Schwefelverbindung richtet sich nach dem Anteil gelösten Nickels respektive Kupfers und liegt beispielsweise im Bereich von 8 bis 20 mg pro mg gelösten Nickels plus Kupfers. Besondere Maßnahmen sind nicht zu treffen, es kann bei Temperaturen beispielsweise im Bereich von 15 bis 100 °C gearbeitet werden und es reicht aus, der Mischung aus zu reinigendem zumindest ursprünglich alkalischem Abwasser und nichtpolymerer organischer Schwefelverbindung beispielsweise 15 bis 60 Minuten Zeit zu gewähren vor Abtrennung des Nickel respektive Kupfer enthaltenden Niederschlags von der wässrigen Phase.

In einer zweiten Ausführungsform des erfindungsgemäßen Verfahrens kann das zu reinigende alkalische Abwasser, gegebenenfalls erst nach vorheriger Einstellung auf einen pH-Wert beispielsweise im Bereich von 5 bis 6,5, mit einem oder mehreren der vorerwähnten funktionalisierten organischen Polymere, insbesondere in Form makroporösen Harzes behandelt werden. Beispiele für solche Harze umfassen Scavenger-Harze wie solche vom Typ Lewatit® Monoplus TP von Lanxess. Die gegebenenfalls gewünschte vorherige pH-Einstellung auf einen Wert im Bereich von 5 bis 6,5 kann durch Säurezugabe zum alkalischen Abwasser erfolgen, beispielsweise durch Salzsäurezugabe; selbstverständlich handelt es sich danach nicht länger um ein - wie ursprünglich - alkalisches Abwasser. Das zu reinigende zumindest ursprünglich alkalische Abwasser kann mit dem organischen Polymer vermischt werden und letzteres kann nach Bindung von Nickel respektive Kupfer an das Polymer von der wässrigen Phase abgetrennt werden. Bevorzugt ist es jedoch, das zu reinigende zumindest ursprünglich alkalische Abwasser über eine mit makroporösem Harz gefüllte Säule zu führen und so besagtes Vermischen mit dem organischen Polymer und die nachfolgende Abtrennung der wässrigen Phase vom Polymer zu bewirken. Dabei verlässt das gereinigte Abwasser die Säule, und Nickel und Kupfer verbleiben chemisch an das Harz gebunden in der Säule. Die Säule kann so in üblicher Weise betrieben werden, bis die Kapazität des Harzes erschöpft ist.

Das wie vorerwähnt gereinigte Abwasser enthält <0.5 mg/L gelöst vorliegendes Nickel respektive <0.5 mg/L gelöst vorliegendes Kupfer und kann gegebenenfalls, je nach regulatorischer Vorgabe, auf einen pH-Wert beispielsweise im Bereich von 6,5 bis 10 durch entsprechende Säure- respektive Basenzugabe eingestellt werden, bevor es in einen Abwasserkanal eingeleitet werden kann.

Im Falle der ersten Ausführungsform des erfindungsgemäßen Verfahrens kann es notwendig sein, vor der Einleitung in den Abwasserkanal gegebenenfalls überschüssige niedermolekulare organische Schwefelverbindung durch Zugabe geeigneter Metallsalze wie beispielsweise lösliche Eisensalze als Niederschlag zu entfernen. Bei der ersten Ausführungsform kann der vorerwähnte Nickel respektive Kupfer enthaltende Niederschlag separat oder gemeinsam mit einem aus überschüssiger niedermolekularer organischer Schwefelverbindung geeignetem Metallsalz gebildeten Niederschlag mit den vorerwähnten Methoden von der wässrigen Phase abgetrennt werden.

### Ausführungsbeispiel :

12 Kubikmeter alkalisches Abwasser (pH 8,2) mit einem Gehalt an gelöstem Nickel von 265 mg/L, einem Gehalt an gelöstem Kupfer von 24 mg/L und einem Gehalt an chelatisierendem DETA von 1200 mg/L wurden mit 30%iger Salzsäure auf einen pH-Wert von 4,1 eingestellt und nach Zusatz von 36 kg Natriumdimethyldithiocarbamat 20 Minuten bei 32°C gerührt. Nach Zusatz von 50 Liter Flockungshilfsmittel (0,2 gew.-%ige wässrige Polyacrylamid-Lösung) und Vermischen bildete sich ein Niederschlag. Die überstehende Lösung enthielt jeweils < 0,5 mg/L Nickel und Kupfer (bestimmt mit Atomabsorptionsspektroskopie). Nach Zusatz von 48 kg 40 gew.-%iger FeCl₃-Lösung und Einstellung eines pH-Wertes von 7,1 durch Zugabe von 12 gew.-%iger Kalkmilch wurden alle gebildeten Feststoffe durch Filtration abgetrennt und man gewann ein wässriges Filtrat, das über den Abwasserkanal entsorgt werden konnte.

## Patentansprüche

1. Verfahren zur Entfernung von jeweils gelöst und in Gegenwart von chelatisierendem Polyamin vorliegendem Nickel und Kupfer aus alkalischem Abwasser, **dadurch gekennzeichnet, dass** man das Abwasser mit mindestens einer organischen Schwefelverbindung ausgewählt aus der Gruppe bestehend aus Thiocarbamaten, Dithiocarbamaten und Thioharnstoffen behandelt.

2. Verfahren nach Anspruch 1, wobei das alkalische Abwasser zumindest ursprünglich einen pH-Wert im Bereich von 7,5 bis 11 aufweist.

3. Verfahren nach Anspruch 1 oder 2, wobei es sich bei den Thiocarbamaten, Dithiocarbamaten und Thioharnstoffen um niedermolekulare organische Schwefelverbindungen und/oder um funktionelle Gruppen von organischen Polymeren handelt.

4. Verfahren nach Anspruch 1, 2 oder 3, wobei das alkalische Abwasser neben 500 bis 3000 mg/L chelatisierendem Polyamin 10 bis 2000 mg/L gelöstes Nickel und/oder 5 bis 500 mg/L gelöstes Kupfer enthält.

5. Verfahren nach einem der vorhergehenden Ansprüche, wobei das chelatisierende Polyamin Polyalkylenpolyamin umfasst oder ist.

6. Verfahren nach Anspruch 5, wobei das Polyalkylenpolyamin Ethylendiamin, Diethylentriamin und/oder Triethylentetramin umfasst oder ist.

7. Verfahren nach einem der vorhergehenden Ansprüche, wobei Nickel und Kupfer bis auf Restanteile von jeweils <0,5 mg/L entfernt werden.

8. Verfahren nach einem der vorhergehenden Ansprüche, wobei man das alkalische Abwasser, gegebenenfalls erst nach vorheriger Einstellung auf einen pH-Wert im Bereich von 3,5 bis 6, mit der mindestens einen organischen Schwefelverbindung vermischt und den dabei gebildeten Nickel respektive Kupfer enthaltenden Niederschlag von der wässrigen Phase abtrennt, und wobei die mindestens eine organische Schwefelverbindung ausgewählt ist aus niedermolekularen Verbindungen.

9. Verfahren nach einem der Ansprüche 1 bis 7, wobei man das alkalische Abwasser, gegebenenfalls erst nach vorheriger Einstellung auf einen pH-Wert im Bereich von 5 bis 6,5, mit mindestens einem Thiocarbamat-, Dithiocarbamat- und/oder Thioharnstoff-funktionalisierten organischen Polymer vermischt und danach die wässrige Phase nach Bindung von Nickel respektive Kupfer an das Polymer abtrennt.

10. Verfahren nach Anspruch 9, wobei das Polymer ein makroporöses Harz ist.

11. Verfahren nach Anspruch 10, wobei das Vermischen und die Abtrennung der wässrigen Phase durch Führen des Abwassers über eine mit dem makroporösen Harz gefüllte Säule erfolgt und wobei Nickel respektive Kupfer chemisch an das Harz gebunden in der Säule verbleiben.
